Europäisches Patentamt

European Patent Office

Office européen des brevets

(11) Veröffentlichungsnummer: **0 318 656**
**A1**

## (12) EUROPÄISCHE PATENTANMELDUNG

(21) Anmeldenummer: **88115528.7**

(51) Int. Cl.4: **G01F 13/00 , F16D 7/04**

(22) Anmeldetag: **22.09.88**

(30) Priorität: **01.12.87 CH 4699/87**

(43) Veröffentlichungstag der Anmeldung:
**07.06.89 Patentblatt 89/23**

(84) Benannte Vertragsstaaten:
**AT BE CH DE FR GB IT LI NL SE**

(71) Anmelder: **CONTRAVES AG**
**Schaffhauserstrasse 580**
**CH-8052 Zürich(CH)**

(72) Erfinder: **Kaufmann, Klaus**
**Dorfstrasse 7**
**CH-6331 Hünenberg(CH)**

(54) **Vorrichtung zur Dosierung eines rieselfähigen Feststoffes.**

(57) In einer mit Stäuben und Pulvern beaufschlagten Umgebung innerhalb einer Dosiervorrichtung, in welcher ausserdem aller Art Substanzen, abrasive, chemisch aggressive, die Gleitfähigkeit oder die Haftwirkung erhöhende und andere mehr durch diesen Apparat dosiert werden sollen, ist eine kontrollierte Kupplungstätigkeit zwischen einem Verteilerorgan (20) und einer Drehblende (30) zu schaffen. Dies wird gelöst, in dem das Verteilerorgan (20) mit der Drehblende (30) bei zunehmender Belastung durch elastisch formschlüssige Kupplungsteile (25,26 und/oder 27) momentan drehlösbar verbunden ist. Eine vorzugsweise Materialpaarung ist Metall (rostfreier Stahl) und ein Werkstoff der POM-Familie.

FIG. 1

EP 0 318 656 A1

## VORRICHTUNG ZUR DOSIERUNG EINES RIESELFAEHIGEN FESTSTOFFES

Die Erfindung bezieht sich auf eine Vorrichtung zum Dosieren von pulverförmigen Substanzen und betrifft eine Verbesserung eines bestehenden Vorrichtungstyps, wie er im Oberbegriff des Patentanspruchs 1 genannt ist.

Dieser Typus von Dosiervorrichtung ist in einer frühen Form in der US-A-909'657 von T.S. Patterson 1908 beschrieben, bei welcher das Grundprinzip in einem Dispenser für puderförmige bis granulatförmige Materialien angewendet wurde. Zwei gegeneinander bewegbare Drehblenden regulieren die Dosierung und ein gleichzeitig mitbewegtes Rührwerk sorgt für die Rieselfähigkeit im Bereich der Aufnahme- oder Durchtrittsöffnungen. Eine wesentliche Verbesserung dieses Prinzips, vor allen Dingen in Richtung eines automatisierten Betriebes, wurde über 70 Jahre später von Pavel Lehky im Jahre 1980 in der CH-A-633'884 beschrieben. Hier wird die in den Behälter eingefüllte pulverförmige Substanz über ein motorisch angetriebenes kegelförmiges Verteilerorgan auf eine Lochblende verteilt, durch welche sie aus der Dosiervorrichtung austreten kann. Gefördert wird die Substanz durch eine spiralförmige Palette, durch welche sie von der Peripherie zum Zentrum der Blende, dorthin, wo sich das Loch befindet, geschoben wird.

Bei dieser auf einen motorischen Antrieb ausgerichteten und wesentlich verbesserten und damit überhaupt erst in dieser Form in einem automatischen Betrieb nutzbaren Vorrichtung besteht jedoch die unerwünschte Möglichkeit, dass beim Einfüllen der pulverigen Substanz, wenn diese sehr leicht rieselfähig ist, ein Teil des Pulvers sich selbsttätig bis zur Austrittsöffnung bewegt und dabei, ohne jegliche Drehbewegung des Förderteils, durch das Blendenloch bspw. unkontrolliert in den Laborreaktor fällt.

Dieses unkontrollierbare Verhalten könnte behoben werden, wenn es gelänge, im Sinne des Patterson'schen Dispensers eine Verschlussblende an Stelle einer lediglichen Lochblende bei der Lehky'schen Vorrichtung einzuführen und diesen Verschluss, da es sich um eine motorisch angetriebene Vorrichtung für den automatisierten Einsatz handelt, auch motorisch zu öffnen und zu verschliessen.

Es stellte sich jedoch heraus, dass die ledigliche Kombination von einem motorisch angetriebenen Verteilersystems mit einer Drehblende, wie man sie auch bei (a propos handbetriebenen) Gewürzbüchsen findet, die befriedigende Lösung nicht bietet. Dies deswegen: um die pulverförmige Substanz durch die verschlossene Drehblende zu fördern, muss sie durch eine Drehung über einen Oeffnungswinkel geöffnet werden. Ist sie offen, so muss die Drehung weitergeführt werden, denn nun kommt die spiralförmige Palette zur Wirkung, die die an der Peripherie einrieselnde Substanz durch Drehung in den zentraleren Bereich der offenen Blende befördert. Das heisst, dass nach dem Oeffnen eine Art Rutschkupplung zwischen Motor und Drehblende dieses Weiterbewegen ermöglichen soll.

Gegen die Verwendung einer Rutschkupplung, das weiss jeder, der damit zu tun hat, spricht eine mit Stäuben und Pulvern beaufschlagte Umgebung. Bei einem Labordispenser als Dosiervorrichtung kommt noch der erschwerende Umstand dazu, dass aller Art Substanzen, abrasive, chemisch aggressive, die Gleitfähigkeit oder die Haftwirkung erhöhende und andere mehr durch diesen Apparat dosiert werden sollen, sodass eine kontrollierte Kupplungstätigkeit nur dann erwartet werden kann, wenn die Kupplung vom Einfluss dieser Substanzen freigehalten werden kann. Dies zieht natürlich gleich Dichtungsprobleme nach sich. Der Aufwand in der Herstellung und im Unterhalt steigen an und die Betriebssicherheit bleibt auf einem fragwürdigen Niveau.

Es ist daher die Aufgabe der Erfindung dieses Kupplungsproblem zu lösen und eine wenig aufwendige, unterhaltsfreie und damit kostengünstige, jedoch absolut betriebssichere Kupplung zu schaffen.

Wie dies gelöst wird, geht aus dem kennzeichnenden Teil des Patentanspruchs 1 hervor. Bevorzugte Ausführungsformen sind in den abhängigen Patentansprüchen angegeben.

Anhand der nachfolgend aufgeführten Figuren wird die Erfindung nun eingehend diskutiert.

Fig. 1 zeigt die Fördereinrichtung mit Drehblende als zusammenschraubbare Einheit ausgestaltet in demontiertem Zustand.

Fig. 2 zeigt in schematischer Darstellung die Kupplung gemäss Erfindung im Querschnitt.

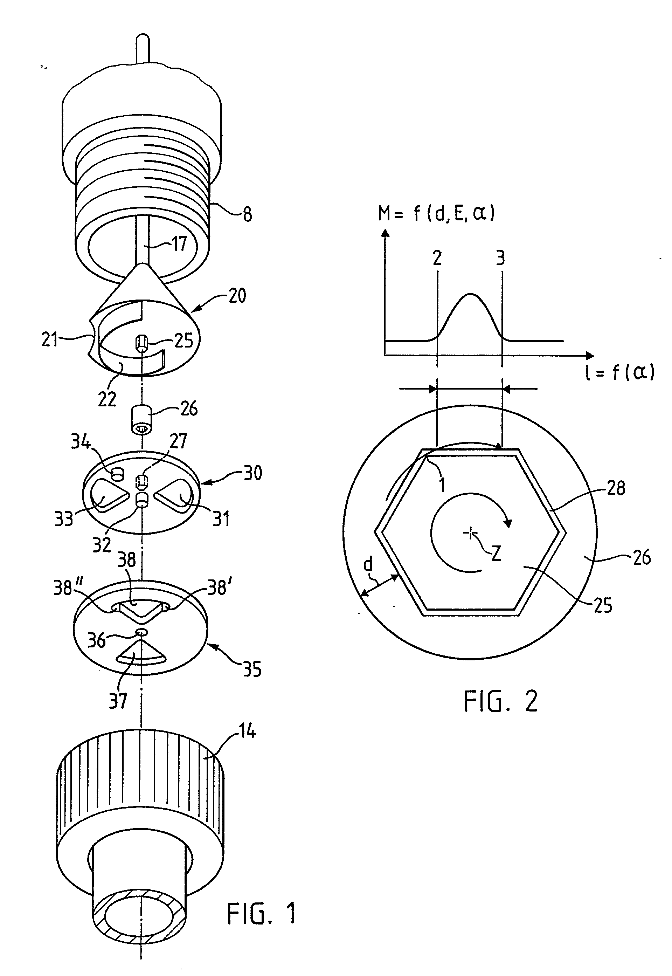

Figur 1 zeigt von oben nach unten ein Teilstück einer Welle 17 mit dem als Konuskörper 20 ausgebildeten Verteilerorgan. Diese Welle 17 ist motorisch angetrieben und mit dem Verteilerorgan 20 drehfest verbunden. Dieses Verteilerorgan 20 hat eine seitlich angeordnete Ausnehmung 21 für den Durchlass der pulverförmigen Substanz und an der Unterseite ist ein leicht spiralig verlaufender Förderteil 22 angeordnet, der das Pulver beim Drehen zur Mitte hin verschiebt.

Unterhalb des Konuskörpers befindet sich eine Drehblende 30 mit zwei versetzt zueinander angeordneten Austrittsöffnungen 31,33. Diese Drehblende bildet mit einer Bodenplatte 35 mit ebensolchen Austrittsöffnungen 37,38 den Teil der Dosiervorrichtung, mit dem der Pulverdurchtritt geöffnet oder geschlossen wird. Blende und Platte können über einen Zentrierzapfen 32 und eine zentrale Durchgangsbohrung 36 drehbar ineinander gesteckt werden. Im montierten Zustand ist die Bodenplatte 35 drehfest und die Drehblende 30 drehbar angeordnet. Zur Festlegung der Schliess-/Oeffnungsfunktion ist die Drehblende 30 an der Unterseite mit einem Führungszapfen 34 versehen, der in entsprechend ausgebildete Ausnehmungen 38' und 38" an einer der Ausnehmungen 37,38 der Bodenplatte angeordnet ist. Auf diese Weise sind die ZU/OFFEN Positionen, das ist das Uebereinanderliegen oder nicht Uebereinanderliegen der korrespondierenden Oeffnungen in Blende und Platte, sauber definiert und in der Offenstellung kann durch die Anzahl Umdrehungen des Verteilerorgans 20 mit dem Förderteil 22 das Pulver genau dosiert werden.

Die Verbindung zwischen dem motorbetriebenen Verteilerorgans 20 und der Drehblende 30 ist durch die erfindungsgemässe Kupplung mit den Teilen 25,26,27 bewerkstelligt, deren Funktionieren weiter unten im Zusammenhang mit der anderen Figur noch eingehend erklärt wird. An dieser Stelle soll einfach angenommen werden, dass diese Kupplung so funktioniert, wie sie erfindungsgemäss funktionieren soll.

In zusammengebautem Zustand der Teile 20,30 und 35 mittels der Ueberwurfmutter 14, die über das Gewinde 8 geschraubt wird, ist das Verteilerorgan 20 über die Kupplungseinrichtung mit den Teilen 25,26,27 drehbar verbunden. Die Drehbarkeit tritt oberhalb eines bestimmten Drehmoments ein, unterhalb sind Verteilerorgan 20 und Drehblende 30 drehfest wirkverbunden. Auf der anderen Seite ist die Drehblende 30 durch den in die Bohrung 36 der Bodenplatte 35 eingreifenden Zapfen 32 zentrisch geführt. Ein auf derselben Seite angeordnete Zapfen 34 greift in die Durchtrittsöffnung 38 ein und dient als Anschlag, durch welchen im wesentlichen die deckungsgleiche Position der Oeffnungen 31,33 der Drehblende 30 mit den Oeffnungen 37,38 der Bodenplatte 35 gewährleistet wird.

Ausgehend von einer Grundstellung, in welcher die Oeffnungen 31,33 der Drehblende 30 versetzt zu den Oeffnungen 37,38 der Bodenplatte 35 angeordnet sind (Schliesstellung), wird der rieselfähige Feststoff zurückgehalten. Beim Starten des Motors wird die Welle 17 und damit das Verteilerorgan 20 mit dem Förderteil 22 sowie die Drehblende 30 um einen bestimmten Winkel in Bezug auf die feststehende Bodenplatte 35 gedreht. Hierbei wird die Oeffnung 31 über die Oeffnung 37 und die Oeffnung 33 über die Oeffnung 38 geschoben. Sobald nun der Zapfen 34 an der Drehblende 30 in die zusätzliche Ausnehmung 38' in der Oeffnung 38 gegen die Drehrichtung ansteht, erhöht sich das Drehmoment und die Kupplung mit den Teilen 25-27 geht vom drehfesten Betrieb in den Drehbetrieb über, damit die nun einsetzende Förderung der Substanz aufrecht erhalten werden kann. Wird der Motor angehalten und die Drehrichtung umgekehrt, so wird der Durchlauf wieder verschlossen, das heisst, der oben geschilderte Vorgang läuft in umgekehrter Richtung ab. Diese ermöglicht eine schrittweise Zugabe eines Feststoffes. Um dies alles zu bewerkstelligen muss die Kupplung folgendermassen ausgestaltet sein und folgendermassen funktionieren.

Figur 2 zeigt das Prinzip dieser Kupplung. Wie schon gesagt, soll diese Kupplung so im Ungefähren die Charakteristik einer Rutschkupplung aufweisen, wobei das Prinzip der Rutschkupplung aus den oben genannten Gründen nicht verwendet wird. Dargestellt sind im Querschnitt die beiden Kupplungsteile 25, ein sechskantförmiger Kupplungszapfen, der mit dem Verteilerorgan 20 drehfest verbunden ist, und 26, ein Kupplungsstück mit einem Innensechskantloch 28, in welches der Kupplungszapfen 25 eingesteckt ist. Das Kupplungsstück 26 kann in der einen Ausführungsform drehfest mit der Drehblende 30 verbunden sein, in einer anderen Ausführungsform ist es gleicherweise über einen zweiten sechskantförmigen Kupplungszapfen 27, der einerseits mit der Drehblende 30 fest verbunden und andererseits in das Kupplungsstück eingeführt ist, wirkverbunden.

Nun ist entweder der Kupplungszapfen 25 (auch 27) oder das Kupplungsstück 26 (ggf. beide) aus einem Material mit einem Elastizitätsmodul wesentlich kleiner als festes Metall, im herkömmlichen Sinn verstanden (also kein Blei, Natrium dergl.), und einem Elastizitätsbereich wesentlich grösser als Metall gefertigt. Unter motorischer Kraft beginnt sich der Kupplungszapfen im Sechskantloch 28 des feststehenden Kupplungsteiles 26 in Pfeilrichtung um eine Zentrum Z zu drehen. Sobald die für alle Kanten des sechskantförmigen Kupplungszapfens stellvertretende Kante 1 des Kupplungszapfens die Innenwand des Sechskantloches 28 an der Stelle 2 berührt, steigt das Drehmoment an und erreicht ein Maximum, um wieder abnehmend am Punkt 3 das Ausgangsdrehmoment zu erreichen. Dies entspricht einer Drehung um ca. 60°, welcher Vorgang in einem zwischen zwei Kanten darübergezeichneten Diagramm veranschaulicht wird. Anstelle eines Rutschens tritt hier eine elastische Deformation, deren Kraft benützt wird, um die Drehblende 30 zu bewegen und deren Maximalkraft so ausgelegt ist, dass der Motor das Verteilerorgan 20 trotz feststehender Drehblende 30 in der eingestellten Drehrichtung weiterbewegen kann. Dass die Kupplung eine wellenförmige Widerstandscharakteristik aufweist, ist in diesem Anwendungsfall unbedeutend. Bedeutend hingegen ist die Tatsache, dass durch Ausschaltung des Reibschlusses und die Benützung eines mit Kraft gezielt überwindbaren Formschlusses das Verunreinigungsproblem gelöst wurde. Ferner kann durch geschickte Materialwahl des Elastikteiles der chemischen Aggressivität begegnet werden. Vorzugsweise wird hier ein Acetalkunststoff aus der Familie POM verwendet, das die geeigneten mechanischen wie auch chemischen Eigenschaften aufweist. Trotz allen diesen namhaften Vorteilen ist so ein Kupplungsstück derart billig, dass es als Verbrauchsmaterial zum Auswechseln zur Verfügung gestellt werden kann. Und dann zeigt sich ein weiterer, nicht zu unterschätzender Vorteil, es kann mit einem Handgriff abgezogen und ersetzt werden.

Der Widerstand gegen eine relative Drehung der beiden Kupplungsteile 25 und 26 soll ausreichend sein, die Drehblende 30 auch gegen kleinere Widerstände, bspw. Verklemmen von Pulverpartikeln oder leichtes Verkleben, zu betätigen aber nicht so gross, dass deswegen der Motor unnötig belastet wird. Die Parameter, die diese Funktion bestimmen sind das Elastizitätsmodul E des gewählten Materials und die Wanddicke d des Kupplungsteils 25. Die Wanddicke spielt solange eine Rolle, wie die Umfangerweiterung durch das Aufspannen des Kupplungsteils über die Kantenradien, die dann über die kleineren Flächenradien hinweglaufen, noch stattfindet. Bei dicken Wandstärken überwiegen die Kompressionskräfte (Stauchen) gegenüber den Zugkräften (Dehnen).

Versuche haben ergeben, dass bei den gezeigten Proportionen der elastische Kupplungsteil auch nach einer grossen Anzahl von Dosiervorgängen noch intakt war. Diese technische Robustheit war eine Ueberraschung und zeigte eindeutig die Tauglichkeit des erfinderischen Prinzips. Allerdings empfiehlt es sich, den elastischen Kupplungsteil häufiger auszuwechseln, insbesondere dann, wenn einer möglichen Kontamination begegnet werden soll. Das Auswechseln dieses Kupplungsteiles bei einem Wechsel des eingesetzten Chemikaliums, welche ohnehin eine Reinigung der Vorrichtung erfordert, kann gleichzeitig und in einfachster Weise auch der flexible Kupplungsteil gleich mit ausgewechselt werden.

Die Herstellung des Kupplungsteiles 25 ist einfach. So kann bspw. ein gelochter Kunststoffstab (Kunststoffrohr) mit einem Sechskant-Räuminstrument geräumt (durchgestossen) werden. Dies kann vor oder nach dem Zuschneiden auf Länge geschehen. Auch hier ist es wieder die Einfachheit, die besticht. Sind die Kupplungszapfen 25 und 27 aus Metall oder einem harten Kunststoff (Thermodur) hergestellt, so nützen sie sich über ihre gesamte Lebensdauer nicht ab und das einzige Verschleissteil ist das billig herzustellende und einfach auszuwechselnde Kupplungsteil 25, das Verbindungsstück zur Uebertragung der motorischen Kraft.

Das Sechskantprofil ist eines von mehreren taugliche "Vielecken". Sinnvoll ist die Verwendung von Vier- bis Achtecken. Unter vier Kanten wird der Verschleiss zunehmen und über acht Kanten die Formschlussfähigkeit, wobei sich die Kupplungscharakteristik sukzessive der einer Rutschkupplung mit Reibschluss nähert. Ein Material mit einem zu geringen Elastizitätslängenbereich wird im Betrieb zunehmend plastische Verformungen aufweisen, welche die Funktionsfähigkeit beeinträchtigen. Ein Material mit einem zu hohen Elastizitätsmodul wird hingegen den eingesetzten Motor unnötig beanspruchen und letztlich wird ein Material, das all dem gerecht wird, aber eine geringe chemische Resistenz aufweist, auch nichts taugen, da nebst dem Angriff auf das Material, dieses angegriffene Material auch als Verunreinigung in die durchrieselnde Chemiekalien eingehen wird. Damit ist der Materialwahl, die chemische wie auch mechanische Aspekte umfasst, grosse Aufmerksamkeit zu schenken. Wie oben schon dargestellt, sind Kunststoffe aus der Familie POM sehr geeignet. Auch Copolymere auf dieser Basis sind brauchbar. Weniger geeignet sind Naturkautschuke oder Silikongummis (auch die harten), obwohl sie notfalls auch verwendet werden könnten. Weitere nützliche Materialpaarungen lassen sich über das E-Modul und den Reibungskoeffizienten (Dubbel) und die chemische Verträglichkeit (Merck Index, d'Ans-Lax) finden, wobei die obigen Kriterien massgeblich sind. Als metallisches Material bewährt sich insbesondere rostfreier Stahl, welcher erfahrungsgemäss chemisch sehr resistent und zudem leicht zu reinigen ist. An Stelle von Metall kann auch ein harter Kunststoff eingesetzt werden, wie er bspw. als Thermodur-Werkstoff bekannt ist. Es können auch feinstporige, also glatte Keramikteile verwendet werden, allerdings beginnt bei solchen Materialien der Preis für Material, Herstellung und Bearbeitung eine Rolle zu spielen.

Wie schon weiter oben erwähnt, ist entweder der Kupplungszapfen 25 (auch 27) oder das Kupplungsstück 26 (ggf. beide) aus einem elastischen Material gefertigt, das durch seinen Elastizitätsmodul die gesuchte Eigenschaft der Kupplung herbeiführt. Systematisch betrachtet sind folgende Kombination (Paarungen) möglich, so dass:

    a1. ein drehfest am Verteilerorgan 20 angeordneter Kupplungteil 25 aus einem höher elastischen Material gefertigt ist, als ein an der Drehblende 30 drehfest angeordneter Gegenkupplungsteil (26,27);

a2. ein drehfest am Verteilerorgan 20 angeordneter Kupplungsteil 25 aus einem niedriger elastischen Material gefertigt ist, als ein an der Drehblende 30 drehfest angeordneter Gegenkupplungsteil (26,27);

b1. ein erster drehfest am Verteilerorgan 20 angeordneter Kupplungsteil 25 aus einem höher elastischen Material gefertigt ist als ein an der Drehblende 30 drehfest angeordneter zweiter Kupplungsteil 27 und ein zwischen beiden Kupplungsteilen 25,27 lösbar angeordneter dritter Kupplungsteil (26);

b2. der dritte Kupplungsteil (26) aus einem höher elastischen Material gefertigt ist als der erste 25 und zweite 27 Kupplungsteil;

b3. der zweite Kupplungsteil 27 aus einem höher elastischen Material gefertigt ist als der erste 25 und dritte Kupplungsteil 26;

c1. der erste 25 und zweite 27 Kupplungsteil aus einem höher elastischen Material gefertigt ist als der dritte Kupplungsteil 26;

c2. der zweite 27 und dritte 26 Kupplungsteil aus einem höher elastischen Material gefertigt ist als der erste Kupplungsteil 25;

c3. der erste 25 und dritte 26 Kupplungsteil aus einem höher elastischen Material gefertigt ist, als der zweite Kupplungsteil 27.

Wenn nun auch nicht jede dieser systematisch erfassten Varianten konstruktiv sinnvoll ist, so sind sie doch allesamt gemäss Erfindung funktionsfähig. Ferner führt eine analoge systematische Betrachtung der geometrischen Varianten (im Gegensatz zu den oben aufgezählten materialcharakteristischen Varianten) zu gleichen Resultaten. Die Formschlüssigkeit ist durch einen Positiv-n-Eck-und einem komplementär dazu geformten Negativ-n-Eck-Teil herbeigeführt welche man mit Zapfen und Büchse beschreiben kann. Zapfen und Büchse wirken ineinandergesteckt zusammen.

Die systematische Verknüpfung der materialcharakteristischen und geometrischen Eigenschaften der Kupplungsteile untereinander, führt zu einer noch grösseren Vielzahl von Varianten, die alle funktionieren, ausser, an einer logischen Wahrheitstabelle verglichen, die Aequivalenzen (alle Teile gleich (Zapfen,Büchsen,Elastizität)), das heisst, dass systematisch die Antivalenzen (im Sinne des Exklusiv Oder) aufgesucht werden sollen. Selbstredend fallen alle diese Varianten unter die erfinderische Idee und unterstehen deshalb dem geltenden Schutzbereich).

## Ansprüche

1. Vorrichtung zur Dosierung eines rieselfähigen Feststoffes, bestehend aus einem Aufnahmebehälter für den Feststoff, einem darin angeordneten Verteilerorgan (20), das durch eine Antriebswelle (17) in beiden Drehrichtungen antreibbar ist, mit einer unterhalb des Verteilerorgans angeordneten Drehblende (30) und einer unterhalb dieser zugeordneten Bodenplatte (35), welche beide zueinander um einen Winkel der kleiner ist als eine volle Umdrehung drehbar sind und welche beide Oeffnungen (31,33,37,38) zum Durchlass des Feststoffes aufweisen und diese Oeffnungen durch Verdrehung von Blende und Platte verschliessbar sind, dadurch gekennzeichnet, dass das Verteilerorgan (20) mit der Drehblende (30) bei zunehmender Belastung durch elastisch formschlüssige Kupplungsteile (25,26 und/oder 27) momentan drehlösbar verbunden ist.

2. Vorrichtung nach Anspruch 1, dadurch gekennzeichnet, dass Kupplungsteile (25,26,27) Zapfen (25,27) mit Vieleckquerschnitt sind und mit einem Kupplungsstück (26) mit mindestens einer dem Zapfenquerschnitt entsprechenden Vieleckausnehmung (28) verbunden sind, wobei mindestens ein Kupplungsteil aus einem Material mit einem Elastizitätsmodul kleiner als $E = 28{\cdot}10^5$ N/cm² besteht.

3. Vorrichtung nach Anspruch 1, dadurch gekennzeichnet, dass Kupplungsteile (25,26,27) Büchsen mit Vieleckquer schnitt sind und mit einem Kupplungsstück mit mindestens einem dem Büchsenquerschnitt entsprechenden Zapfen verbunden sind, wobei mindestens ein Kupplungsteil aus einem Material mit einem Elastizitätsmodul kleiner als $E = 28{\cdot}10^5$ N/cm² besteht.

4. Vorrichtung nach Anspruch 2 oder 3, dadurch gekennzeichnet, dass die Zapfen (25,27) oder Büchsen aus Metall bestehen und je an dem Verteilerorgan (20) und der Drehblende (30) fest angeordnet sind und dass das Verbindungsteil (26) zwischen den beiden Zapfen oder Büchsen ein zylinderförmiges Kunststoffteil mit einem durchgehenden Vieleckloch (28) oder zwei endständigen Vieleckausnehmungen oder ein zu den Büchsen passender Zapfen ist.

5. Vorrichtung nach einem der Ansprüche 1 bis 4, dadurch gekennzeichnet, dass ein drehfest am Verteilerorgan 20 angeordneter Kupplungsteil 25 aus einem höher elastischen Material gefertigt ist, als ein an der Drehblende 30 drehfest angeordneter Gegenkupplungsteil (26,27);

6. Vorrichtung nach Anspruch 5, dadurch gekennzeichnet, dass ein drehfest am Verteilerorgan 20 angeordneter Kupplungsteil 25 aus einem niedriger elastischen Material gefertigt ist, als ein an der Drehblende 30 drehfest angeordneter Gegenkupplungsteil (26,27);

7. Vorrichtung nach Anspruch 5, dadurch gekennzeichnet, dass ein erster drehfest am Verteilerorgan 20 angeordneter Kupplungsteil 25 aus einem höher elastischen Mate rial gefertigt ist als ein an der Drehblende 30 drehfest angeordneter zweiter Kupplungsteil 27 und ein zwischen beiden Kupplungsteilen 25,27 lösbar angeordneter dritter Kupplungsteil (26);

8. Vorrichtung nach Anspruch 5, dadurch gekennzeichnet, dass der dritte Kupplungsteil (26) aus einem höher elastischen Material gefertigt ist als der erste 25 und zweite 27 Kupplungsteil;

9. Vorrichtung nach Anspruch 5, dadurch gekennzeichnet, dass der zweite Kupplungsteil 27 aus einem höher elastischen Material gefertigt ist als der erste 25 und dritte Kupplungsteil 26;

10. Vorrichtung nach Anspruch 5, dadurch gekennzeichnet, dass der erste 25 und zweite 27 Kupplungsteil aus einem höher elastischen Material gefertigt ist als der dritte Kupplungsteil 26;

11. Vorrichtung nach Anspruch 5, dadurch gekennzeichnet, dass der zweite 27 und dritte 26 Kupplungsteil aus einem höher elastischen Material gefertigt ist als der erste Kupplungsteil 25;

12. Vorrichtung nach Anspruch 5, dadurch gekennzeichnet, dass der erste 25 und dritte 26 Kupplungsteil aus einem höher elastischen Material gefertigt ist, als der zweite Kupplungsteil 27.

13. Vorrichtung nach einem der Ansprüche 1 bis 12, dadurch gekennzeichnet, dass der Querschnitt des Vieleckprofils ein m- bis n-Eck ist, mit m = 3 und n = 12.

14. Vorrichtung nach Anspruch 13, dadurch gekennzeichnet, dass der Querschnitt des Vieleckprofils ein Sechseck ist.

15. Vorrichtung nach einem der Ansprüche 1 bis 14, dadurch gekennzeichnet, dass der flexible Kupplungsteil aus einem Material mit einem Elastizitätsmodul zwischen $10^*10^4$ bis $50^*10^4$ N/cm$^2$ besteht.

16. Vorrichtung nach einem der Ansprüche 1 bis 15, dadurch gekennzeichnet, dass der flexible Kupplungsteil aus einem Material der Familie POM-C oder einer Modifikation davon besteht.

8

17

20

21

25

22

26

34

27

30

33

31

32

38

38″

38′

36

35

37

14

FIG. 1

$M = f(d, E, \alpha)$

2

3

$l = f(\alpha)$

1

28

26

25

d

Z

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 234 332 (CONTRAVES AG) * Insgesamt * --- | 1-4,13, 14 | G 01 F 13/00 F 16 D 7/04 |
| A | US-A-3 347 062 (E.R. SCHUMANN et al.) * Spalte 2, Zeile 41 - Spalte 4, Zeile 45; Figuren * --- | 1-4,10, 13-15 | |
| D,A | CH-A- 633 884 (DR. PAVEL LEHKY) * Insgesamt * ----- | 1 | |

**RECHERCHIERTE SACHGEBIETE (Int. Cl.4)**

G 01 F
F 16 D

Der vorliegende Recherchenbericht wurde für alle Patentansprüche erstellt

| Recherchenort | Abschlußdatum der Recherche | Prüfer |
|---|---|---|
| DEN HAAG | 02-03-1989 | ROSE A.R.P. |